(19) Europäisches Patentamt

European Patent Office

Office européen des brevets

(11) **EP 1 236 487 A2**

(12) **EUROPEAN PATENT APPLICATION**

(43) Date of publication:
**04.09.2002  Bulletin 2002/36**

(51) Int Cl.$^7$: **A63F 13/10**

(21) Application number: **02251401.2**

(22) Date of filing: **28.02.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **28.02.2001  JP 2001054178**

(71) Applicant: **Konami Corporation
Minato-ku, Tokyo (JP)**

(72) Inventor: **Aoki, Jun
Minato-ku, Tokyo (JP)**

(74) Representative: **Pluckrose, Anthony William et al
BOULT WADE TENNANT,
Verulam Gardens
70 Gray's Inn Road
London WC1X 8BT (GB)**

(54) **Game advertisement charge system, game advertisement display system, game machine, game advertisement charge method, game advertisement output method, game machine control method and program**

(57)  In order to generate reasonable game advertisement charges and to direct a player's attention to a game advertisement, a charge amount to be charged for outputting a game advertisement is calculated based on displayed amount information, e.g., information concerning a display time and area, and display quality information, e. g., information concerning a display position on a game screen, presence or absence of clipping with an advertisement image, an advertisement display direction in a vertical 3D space, and so forth. Further, displaying of that advertisement is limited, when some advertisement has been displayed to a predetermined amount. Still further, an advertisement display program or data is obtained before a game program or game data is obtained, and the game program or the game data is obtained while an advertisement is being output based on the advertisement output program or data obtained. Yet further, a charge amount to be charged for outputting an advertisement is calculated based on attribute information obtained in advance concerning players targeted by an advertisement and attribute information of the player enjoying the game.

FIG. 3

EP 1 236 487 A2

**Description**

The present invention relates to a game advertisement charge system, a game advertisement display system, a game machine, a game advertisement charge method, a game advertisement output method, a game machine control method, and a program.

Game machine systems for displaying commercial advertisements on game screens are disclosed in Japanese Patent Application Laid-open No. Hei 9-10440. These systems can desirably exchange commercial advertisements to display (hereinafter referred to as a game advertisement) while a game is being performed so that the effectiveness of the commercial advertisements can be enhanced. According to this system, advertisement charges are collected in return for displaying a game advertisement so that the price of the game software can be accordingly reduced or made free. International Publication WO98-29974 and Japanese Patent Application Laid-open No. 2000-29712 also disclose similar systems.

However, the above-mentioned publications disclose only distribution or displaying techniques for game advertisements but not methods for setting advertisement charges. In order to have the above mentioned advertisement systems in wide circulation, a technique of allowing reasonable charging for outputting (by means of displaying or audio outputting) an game advertisement is required.

Moreover, the above publications do not disclose any techniques of directing the player's attention to the game advertisement. The player, who is focused on the game, is not likely to pay very great attention to the advertisement output. Therefore, in order to have the above mentioned advertisement systems receive widespread attention, a technique of directing the player's attention to the game advertisement is also required.

The present invention has been conceived in order to achieve the above objects. Specifically, the first object of the present invention is to provide a game advertisement charge system, method, and program capable of determining a reasonable charge amount for a game advertisement.

The second object of the present invention is to provide a game advertisement display system, a game machine, a game advertisement output method, and a game machine control method, all capable of directing the player's attention to the game advertisement.

In order to achieve the above objects, according to one aspect of the present invention, there is provided a game advertisement charge system, comprising means for displaying an advertisement on a game screen; means for obtaining displayed amount information concerning a displayed amount of the advertisement displayed; and means for calculating a charge amount to be charged for displaying the advertisement based on the displayed amount information obtained.

According to this aspect of the present invention, a charge amount to be charged for displaying an advertisement on a game screen may be calculated based on displayed amount information concerning an amount of advertisement displayed. Displayed amount information may be information including quantity evaluation on an advertisement, such as a display frequency, a display time, and a displayed area. According to the present invention, it is possible to determine a reasonable game advertisement charge amount that reflects quantity evaluation. A calculated charge amount may be printed, displayed, or transmitted via a communication device to another communication device.

In a preferred embodiment of the present invention, the displayed amount information may contain displayed area information concerning an area on the game screen, where the advertisement is displayed. Displayed area information may be information indicative of the size of an advertisement displayed on a game screen. In the case where an advertisement displayed area varies on a real time basis, the integral or average value of the advertisement displayed areas, for example, may be used as displayed area information. In this embodiment, a larger advertisement displayed area on a game screen will result in a higher advertisement charge. That is, a reasonable game advertisement charge amount can be determined.

In another preferred embodiment of the present invention, the displayed amount information may contain display time information concerning a time during which the advertisement is displayed on the game screen. Display time information may be information indicative of a time during which an advertisement is displayed on a game screen. In the case where an advertisement is displayed discontinuously on a game screen, information indicative of a total display time, for example, may be used as display time information. In this embodiment, a longer display time of an advertisement on a game screen will result in a higher advertisement charge. That is, a reasonable game advertisement charge amount can be determined.

In still another preferred embodiment of the present invention, the displayed amount information may contain frequency information concerning the number of times the advertisement has been displayed onthegamescreen. Display frequency information may be information indicative of the number of times an advertisement has been displayed on a game screen. In this embodiment, a more frequently displayed advertisement on a game screen will be charged more. That is, a reasonable game advertisement charge amount can be determined.

According to another aspect of the present invention, there is provided a game advertisement charge system, comprising means for displaying an advertisement on a game screen; means for obtaining display quality information concerning the advertisement displayed; and means for calculating a charge amount to be charged for displaying the advertisement based on the display quality information obtained.

According to this aspect of the present invention, a charge amount to be charged for displaying an advertisement on a game screen may be calculated based on display quality information concerning the advertisement displayed. Display quality information may be information including quality evaluation on an advertisement, such as sharpness of the image displayed, the position on a game screen where the advertisement image is displayed, whether or not the entire advertisement image is displayed (without any missing portions), a relationship between the direction in which an advertisement is displayed, or an advertisement placement direction, and the viewing direction. According to the present invention, it is possible to determine a reasonable game advertisement charge amount that reflects quality evaluation. A calculated charge amount may be printed, displayed, or transmitted via a communication device to another communication device.

In one preferred embodiment of the present invention, a view of a virtual 3D space seen from a predetermined viewpoint may be displayed on the game screen, and the display quality information may contain information describing a relationship between a display direction in which an advertisement is displayed in the 3D space, and the viewing direction. In the case where, for example, a game image is created using a texture mapping technique, an advertisement display direction can be obtained based on the direction of a polygon, for example, to which an advertisement image is attached as a texture, or a normal direction. In this embodiment, should the viewing direction be substantially perpendicular to the advertisement display direction and the advertisement displayed on the game screen is thus hard to view, an advertisement charge may be proportionally reduced. That is, a more reasonable game advertisement charge amount can be determined.

In another embodiment of the present invention, the display quality information may contain display position information concerning a position on the game screen where an advertisement is displayed. Generally, a higher advertisement effect would be expected from an advertisement displayed around the center of a game screen, compared to an advertisement displayed near the peripheries of a game screen. In this embodiment, as a charge amount can be calculated based on display quality information including display position information, it is possible to determine a reasonable game advertisement charge amount that reflects a difference in an advertisement effect due to a difference in a display position.

In still another embodiment of the present invention, a view of a vertical 3D space seen from a predetermined view may be displayed on the game screen, and the display quality information may contain clipping information describing whether or not an advertisement is clipped and only a part thereof is thus displayed on the game screen. Clipping information may describe at least whether or not an advertisement is clipped and that only a part thereof is thus displayed on a game screen. Alternatively, clipping information may describe a ratio in area between a displayed portion of an advertisement on a game screen and the entire advertisement. In this embodiment, in the case where an advertisement is installed partially out of the view field and only a part thereof is resultantly displayed on the game screen, a game advertisement charge can be reduced proportionally or even made free . That is, a more reasonable game advertisement charge amount can be determined.

According to still another aspect of the present invention, there is provided a game advertisement display system, comprising advertisement display means for displaying an advertisement on a game screen; means for obtaining displayed amount information concerning a displayed amount of the advertisement; and means for limiting displaying of the advertisement on the game screen when the displayed amount of the advertisement reaches a predetermined amount.

According to this aspect of the present invention, when the display amount of an advertisement has reached a certain amount, displaying of that advertisement on a game screen is limited by, for example, discontinuing the display of the advertisement or replacing it with another advertisement. This arrangement can solve a problem that a player has grown accustomed to an advertisement as a result of the advertisement having been displayed on the screen to a predetermined display amount and remaining displayed on the game screen, and makes it possible to direct the player's attention to a game advertisement. Note that the predetermined amount may be either fixed information or information varying upon necessity.

In a preferred embodiment of the present invention, the displayed amount information may be information corresponding to the number of times of displaying the advertisement (display frequency) . This embodiment can solve a problem of an advertisement that a player has grown accustomed to as a result of having been displayed to a predetermined display frequency remaining displayed on the game screen.

In another preferred embodiment of the present invention, the displayed amount information is information corresponding to a display time of the advertisement. This embodiment can solve a problem of an advertisement that a player has grown accustomed to as a result of having been displayed to a predetermined display time remaining displayed on the game screen.

According to yet another aspect of the present invention, there is provided a game machine for obtaining a game program or game data and for executing game processing based on the game program or game data obtained, comprising means for obtaining an advertisement displaying program or data. In the game machine, the advertisement displaying program or data is obtained before the game program or game data is obtained, and the game program or game data is then obtained while an advertisement is being displayed based on the advertisement displaying program or data obtained.

According to this aspect of the present invention, before obtaining a game program or game data from an information storage medium such as a CD-ROM or DVD, or from a network, a program or data for displaying an advertisement (advertisement display program or data) is obtained from the same or different information storage medium or network. Then, while an advertisement is being displayed based on the advertisement display program or data obtained, a game program or game data is obtained. In other words, an advertisement is being displayed during a process of obtaining a game program or game data. Therefore, an advertisement can be presented to the player at a time when his attention is likely to wander as game processing has yet to be started, whereby the player's attention directed to the game advertisement.

In a preferred embodiment of the present invention, the game machine may further comprise means for storing identification information identifying at least one of advertisements having been displayed; and means for selecting an advertisement displaying program or data to be obtained based on the identification information. This embodiment makes it possible to display a different advertisement every time a game program or game data is obtained, or every time some advertisement has been displayed a predetermined number of times. Alternatively, a certain number of advertisements can be displayed sequentially.

According to yet another aspect of the present invention, there is provided a game advertisement charge system, comprising means for displaying an advertisement on a game screen for a game; means for obtaining attribute information on a player enjoying the game; means for storing attribute information on a player targeted by the advertisement; means for calculating a charge amount to be charged for displaying the advertisement, based on the attribute information of the player targeted by the advertisement and the attribute information of the player enjoying the game.

According to this aspect of the present invention, attribute information on a player targeted by an advertisement may be stored. Attribute information on the player who is enjoying the game may also be obtained. Attribute information is information relating to facts about a player, such as age, sex, profession, and address, that may affect his preference of goods or services. Then, a charge amount to be charged for displaying an advertisement may be calculated based on the attribute information, pre-stored, on a player targeted by the advertisement and attribute information on the player who is actually enjoying the game. This enables, for example, reduction or even waiving of an advertisement charge when, for example, an adult watches an advertisement originally targeted on students. That is, a reasonable game advertisement charge amount can be determined.

In yet another aspect of the present invention, there is provided a game advertisement charge method, comprising the steps of obtaining output amount information concerning an amount of advertisement output while a game is being performed; and calculating a charge amount to be charged for outputting the advertisement, based on the output amount information obtained.

According to this aspect of the present invention, it is possible to determine a reasonable game advertisement charge amount that reflects quantity evaluation on the game advertisement. Note that an advertisement may be output by displaying an image, either as a still or motion image, using audio, or in any other manner.

In yet another aspect of the present invention, there is provided a game advertisement charge method, comprising the steps of obtaining output quality information concerning an advertisement output while a game is being performed; and calculating a charge amount to be charged for outputting the advertisement, based on the output quality information obtained.

According to this aspect of the present invention, it is possible to determined a reasonable game advertisement charge amount that reflects quality evaluation on the game advertisement. Note that an advertisement may be output by displaying an image, either as a still or motion image, using audio, or in any other manner.

In yet another aspect of the present invention, there is provided a game advertisement output method, comprising the steps of obtaining output amount information concerning an amount of advertisement output while a game is being performed; and limiting outputting of the advertisement while the game is being performed when the amount of advertisement output has reached a predetermined value.

This aspect of the present invention can solve a problem of an advertisement that a player has grown accustomed to remaining displayed while the game is being performed, and makes it possible to direct the player's attention to a game advertisement.

According to yet another aspect of the present invention, there is provided a method for controlling a game machine having means for obtaining a game program or game data and means for executing game processing based on the game program or game data obtained, the method comprising the steps of obtaining an advertisement output program or data; outputting an advertisement based on the advertisement output program or data obtained; and obtaining the game program or game data while the advertisement is being output.

According to this aspect of the present invention, an advertisement can be output when the player's attention is relatively likely to wander, and can direct the player's attention to the game advertisement.

According to yet another aspect of the present invention, there is provided a game advertisement charge method, comprising the steps of obtaining attribute information on a player enjoying a game in which an advertisement is output; and calculating a charge amount to be charged for outputting the advertisement based on the attribute information on the player enjoying the game and attribute information, obtained in advance, on a player targeted by the advertisement.

According to this aspect of the present invention, a higher advertisement charge may be imposed when, for example, the attributes of the player who is enjoying the game and that of players targeted by the advertisement are matched. That is, a reasonable game advertisement charge amount can be determined.

According to yet another aspect of the present invention, there is provided a program for having, for example, a home-use or business-use game machine or a computer such as a personal computer to execute the steps of outputting an advertisement on a game screen; obtaining output amount information concerning an amount of the advertisement output; and processing the output amount information as base information in calculation of a charge amount to be charged for outputting the advertisement.

According to this aspect of the present invention, it is possible to determine a reasonable game advertisement charge amount that reflects quantity evaluation. It should be noted that the step of processing the obtained output amount information as base information in calculation of a charge amount to be charged for outputting the advertisement may be a step of, for example, sending the output amount information or information calculated based on the output amount information to a device, such as a server that, for example, calculates a charge amount, or a step of calculating by its own device a charge amount based on the output amount information to print, display, or transmit.

According to yet another aspect of the present invention, there is provided a program for having, for example, a home-use or business-use game machine or a computer such as a personal computer to execute the steps of outputting an advertisement on a game screen; obtaining output quality information concerning the advertisement to be output; and processing the output quality information as base information in calculation of a charge amount to be charged for outputting the advertisement.

According to this aspect of the present invention, it is possible to determine a reasonable game advertisement charge amount that reflects quality evaluation on the game advertisement. It should be noted that the step of processing the obtained output quality information as base information in calculation of a charge amount to be charged for outputting the advertisement may be a step of, for example, sending the output quality information or information calculated based on the output quality information to a device, such as a server that, for example, calculates a charge amount, or a step of calculating by its own device a charge amount based on the quality information to print, display, or transmit.

According to yet another aspect of the present invention, there is provided a program for having, for example, a home-use or business-use game machine or a computer such as a personal computer to execute the steps of outputting an advertisement on a game screen for a game; obtaining attribute information on a player enjoying the game; and processing the attribute information as base information in calculation of a charge amount to be charged for outputting the advertisement.

According to this aspect of the present invention, it is possible to determine a reasonable game advertisement charge based on the attribute information of the player who is watching the game advertisement. It should be noted that the step of processing the obtained player's attribute information as base information in calculation of a charge amount to be charged for outputting the advertisement may be a step of, for example, sending the player's attribute information or information calculated based on the player's attribute information to a device, such as a server that, for example, calculates a charge amount, or a step of calculating by its own device a charge amount based on the attribute information to print, display, or transmit.

Preferred embodiments of the present invention will now be described by way of example only with reference to the accompanying drawings, in which:

Fig. 1 is a diagram showing a complete structure of a game advertisement charge system according to the present invention.

Fig. 2 is a diagram showing a structure of a game machine.

Fig. 3 is a diagram illustrating a game image containing a placard object image having an advertisement image attached thereto.

Fig. 4 is a diagram showing a part of a vertical 3D game space.

Fig. 5 is a diagram explaining the content of an advertisement management database.

Fig. 6 is a diagram explaining an advertisement database established at a game terminal.

Fig. 7 is a diagram showing a state in which an advertisement image is embedded in a texture image.

Fig. 8 is a flowchart explaining an activation advertising process at a game terminal.

Fig. 9 is a flowchart explaining a game image creation process at a game terminal.

Fig. 10 is a flowchart explaining a game end advertisement process at a game terminal.

Fig. 11 is a flowchart explaining an advertisement distribution process at an advertisement management server.

Fig. 12 is a flowchart explaining an advertisement charge process at an advertisement management server.

Fig. 13 is a diagram illustrating a loading image.

Fig. 14 is a flowchart explaining a loading image process at a game terminal.

The entire disclosure of the corresponding Japanese application 2001-054178 filed on February 28, 2001 including specification, claims, drawings and summary, is incorporated herein by reference.

In the following, preferred embodiments of the present invention will be described in detail with reference to the accompanying drawings.

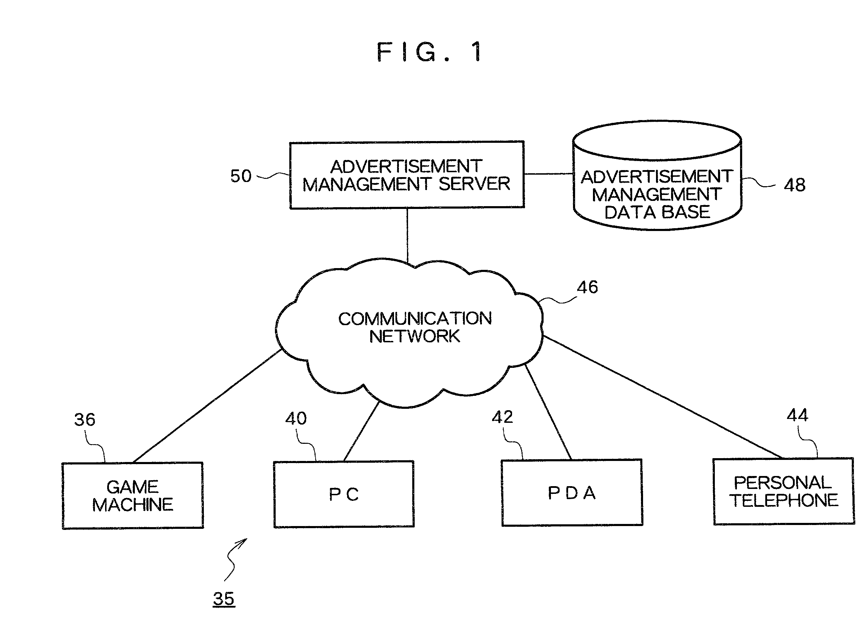

Fig. 1 is a diagram showing the overall structure of a game advertisement charge system in a preferred embodiment of the present invention. The game advertisement charge system 35 shown in the drawing comprises a game machine 36, a personal calculator (PC) 40, a personal data assistant (PDA) 42, and a personal telephone 44, each serving as a game terminal. These game terminals are connected for communication to an advertisement management server 50 via a communication network 46 such as the Internet. The advertisement management server 50 is also connected to an advertisement management database (DB) 48 so that the server 50 can desirably write or read various data necessary for advertisement management with respect to the database 48.

The game machine 36 may be composed mainly of, for example, a home-use game machine, as described later. A business-use game machine (known as an arcade machine) may also be applicable as a game machine 36. The personal calculator 40, the PDA 42, and the personal phone 44, all having known structures, can serve as a game terminal once game software has been installed to them via a communication network 46 or an information storage medium, such as a CD-ROM, a DVD-ROM (trademark), or a memory card. Alternatively, various broadcast receiving systems, such as a cable television receiving terminal and a satellite broadcasting receiving device, which utilize wired or radio communications, may be used as a game terminal.

The advertisement management server 50 is a known server computer system, and can update the content of a game advertisement to be output to a game terminal such as a game machine 36. The server 50 can also calculate, while desirably accessing the advertisement management database 48, a charge amount, or an advertisement charge, to be charged for outputting an advertisement in an ongoing game, wherein the advertisement management database 48 comprises a known storage device, such as a hard disk memory device, that is capable of data writing and reading.

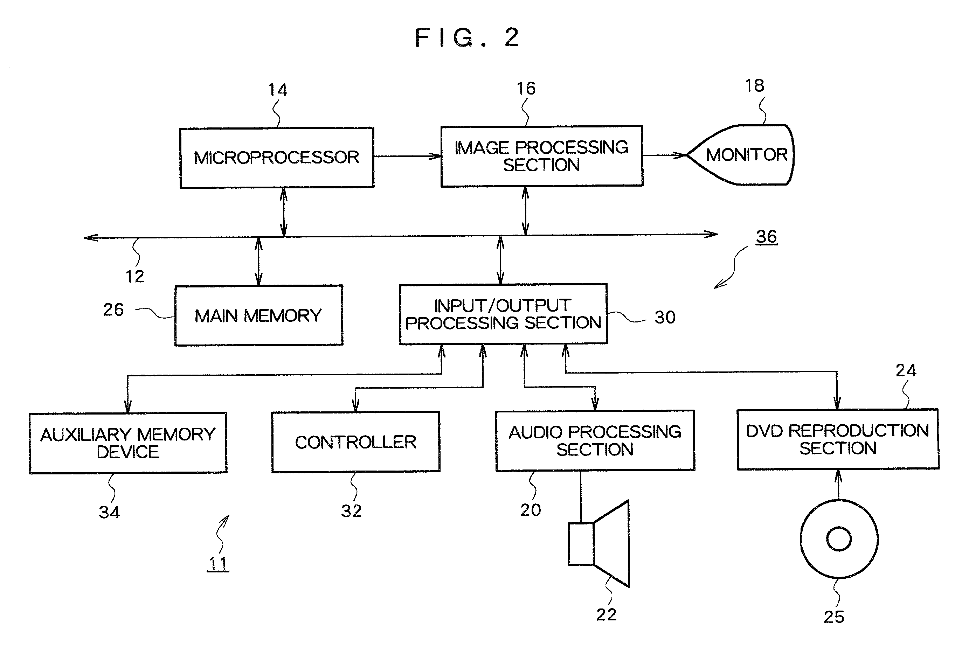

Here, an example of a game machine 36 composed mainly of a home-use game machine will be described. Fig. 2 is a diagram showing a game machine 36 composed mainly of a home-use game machine. The shown game machine 36 comprises a home-use game machine 11, connected to a monitor 18 and a speaker, and a DVD-ROM 25, serving as an information storage medium, attached to the home-use game machine 11. Whereas a DVD-ROM 25 is used here to supply game programs and game data to a home-use game machine 11, any other information storage media, such as a CD-ROM or a ROM card, may be used instead. Alternatively, various communications networks, such as the Internet, may also be utilized to remotely supply game programs and game data to a home-use game machine 11.

The home-use game machine 11 comprises a microprocessor 14, an image processing section 16, a main memory 26, and an input/output processing section 30, all being mutually connected via a bus 12 for data communication. The input/output processing section 30, in particular, is also connected to a controller 32, an auxiliary memory device 34, an audio processing section 20, and a DVD reproduction section 24. Various components of the home-use game machine 11, other than the controller 32, are accommodated in an enclosure. The monitor 18 may be a home-use TV receiver, for example, and the speaker may be a speaker incorporated into the home-use TV receiver.

The microprocessor 14 controls various sections of the home-use game machine 11 based on an operating system stored in the ROM, not shown, or a game program read from the DVD-ROM 25. The bus 12 is necessary for exchanging an address and data among various sections of the home-use game machine 11. The main memory 26 is supplied, upon necessity, with a game program and game data read from the DVD-ROM 25. The image processing section 16, which is constructed including a VRAM, receives image data from the microprocessor 14, and generates a game image in the VRAM based on the image data received. The image processing section 16 also converts the game image into a video signal to output to the monitor 18 at predetermining timing. That is, the image processing section 16 receives, for each polygon, vertex coordinates (X, Y, Z) in a viewpoint coordinate system, vertex color information (R, G, B), texture coordinates (VX, VY), an alpha value ($\alpha$: a semi-transparent composition rate), and so on, from the microprocessor 14, and, using the information received, generates the game image in the VRAM based on the color information, the Z value (depth information), the alpha value, and so on for each pixel constituting the display image. The display image is then output to the monitor 18 at predetermined timing.

The input/output processing section 30 serves as an interface for relaying data communication among the controller 32, the auxiliary memory device 34, the audio processing section 20, the DVD reproduction section 24, and the microprocessor 14. The controller 32 serves as an input means via which the player can input for game operation. The input/output processing section 30 scans operating states of the various buttons of the controller 32 in a given cycle (for example, every one sixtieth of a second), and supplies an operation signal indicative of the scanning result to the microprocessor 14 via the bus 12. Based on the operation signal, the microprocessor 14 judges the player's game operation. The audio processing section 20 is constructed having a sound buffer, and reproduces data of music, game sound effects, and so on, read from the DVD-ROM 25 and stored in the sound buffer, to output to the speaker 22. The DVD reproduction section 24, in response to an instruction from the microprocessor 14, reads a game program and game data from the DVD-ROM 25. The auxiliary memory device 34 may be a known memory device, such as a hard disk storage device, a memory card reader, or a magneto-optical memory device. In this embodiment, various data relating to a game advertisement (advertisement data) is downloaded from the advertisement management server 50 and stored in the auxiliary memory device 34.

In this embodiment, an advertisement (a game advertisement) is output while a game is being performed at a game terminal. A game advertisement may be supplied from various advertisers in the form of a still picture, a motion picture, audio, character data (text data) , and so forth, and stored, by the advertisement management server 50, in the advertisement management database 48. The various advertisement data held in the advertisement management database 48 is sent to a game terminal, such as a game machine 36, via the communication network 46 at desirable timing. The game terminal, such as the game machine 36, outputs a relevant advertisement by means of displaying or audio outputting based on the received advertisement data, while the game is being performed. With the above arrangement, the latest game advertisement can be output at a game terminal so that the effect of an advertisement can be enhanced.

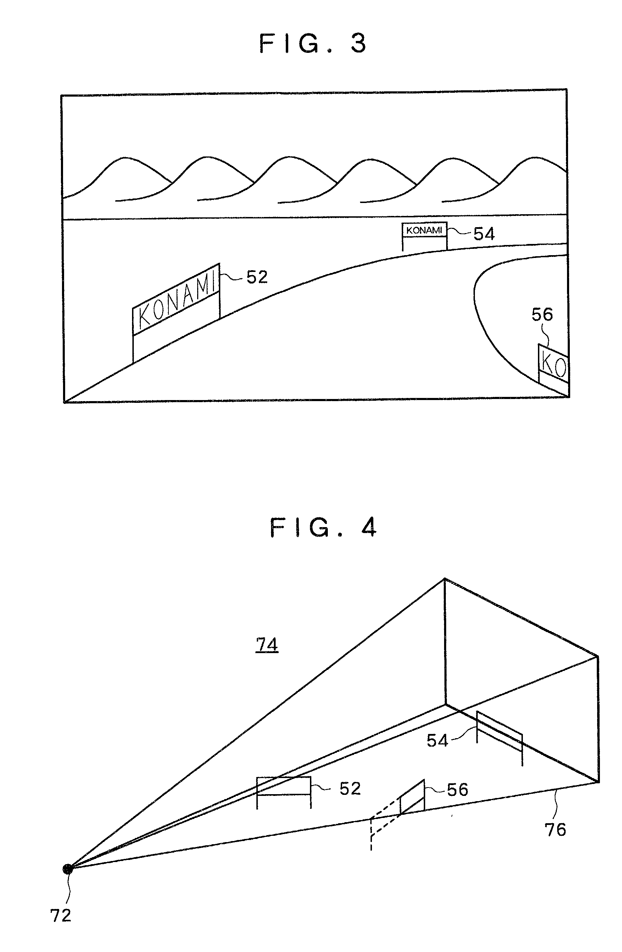

Fig. 3 is a diagram showing an example of a game image displayed on a display device, or a game screen, such as a monitor 18, of the game machine 36. As shown, in this embodiment, an advertisement image representing a commercial advertisement is embedded in a game image for display. Specifically, the game machine 36 is constructed so as to establish a virtual three dimensional (3D) space that serves as a game space within a memory (the main memory 26, and so on), and a view from a viewpoint set up in the space is displayed on the display device. That is, the game machine 36 has game software and game data installed therein that is necessary to execute a 3D game. Fig. 3 shows an example of a game image of a 3D driving game. In this game, placard objects 52, 54, 56 are installed along the road built in the game space (the virtual 3D space), each having an advertisement image attached thereon (texture mapping). A view that would be seen from the viewpoint is displayed on the game screen. Here, the advertisement images attached to the placard objects 52, 54, 56 are all downloaded from the advertisement management server 50. Alternatively, text data describing a copy message for an advertisement, and so on, may be downloaded, instead of an advertisement image itself, from the advertisement management server 50. In this case, the downloaded text data may be converted into an image using font data, pre-stored in the game terminal, so that the resultant image is used as an advertisement image. An object for attachment of an advertisement image is not limited to the placard objects 52, 54, 56, and may be any kinds of objects, including a construction object, such as a building, a game character object, and a moving object, such as a vehicle. For a game character object, an advertisement may be shown as a part or the entirety of a pattern of a dress.

Fig. 4 is a schematic diagram showing a part of the virtual 3D space 74, corresponding to the game image of Fig. 3. As shown, a viewpoint 72 is set up at a point within the virtual 3D space 74, and a semi-pyramidal view field 76 is accordingly established in front of the viewpoint 72. In this example, the placard objects 52, 56 are located relatively close to the viewpoint, so that the advertisement images attached thereon are displayed relatively large on the game screen (Fig. 3). On the contrary, the placard object 54 is located relatively far from the viewpoint, so that the advertisement images attached thereon is displayed relatively small on the game screen (Fig. 3). Moreover, the placard objects 52, 56 are arranged diagonally relative to the viewing direction, so that the advertisement images attached thereon are displayed distorted on the game screen (Fig. 3). On the contrary, the placard object 54 is arranged facing the viewpoint, so that the advertisement image attached thereon is displayed with little distortion on the game screen (Fig. 3). Still further, whereas the placard objects 52, 54 are fully included in the view field, the placard object 56 extends partly out of the view field, and thus may be clipped in creation of a game image. That is, whereas the advertisement images attached on the placards 52, 54 are fully displayed on the game screen, that on the placard 56 is partially missing with only the rest being displayed. Whereas the placard object 54 is located close to the viewing direction and thus displayed around the center of the game screen, the placard objects 52, 56 are located on the far end on the game screen.

In the game advertisement charge system 35 in this embodiment, an advertisement image displayed relatively large on the game screen will be charged with a commensurately high advertisement charge. On the other hand, an advertisement image displayed relatively small will be charged with a commensurately low advertisement charge. Further, when the direction in which an advertisement image is displayed, or a placard installed direction, differs significantly from the viewing direction and the advertisement image is resultantly displayed distorted, a commensurately low advertisement charge will be imposed. On the other hand, when the placard installed direction substantially matches with the viewing direction and the relevant advertisement image is resultantly displayed with less distortion on the game screen, a commensurately high advertisement charge will be imposed. Still further, an advertisement image fully displayed on the game screen will be charged for outputting the advertisement, while an advertisement image only partially displayed due to clipping will not be charged. Alternatively, a ratio in area between an actually displayed portion of an advertisement image and the whole advertisement image may be allowed for in charge calculation. Still further, an advertisement image displayed closer to the center of the game screen may be charged more.

In the following, data processing for realizing the charge method will be described.

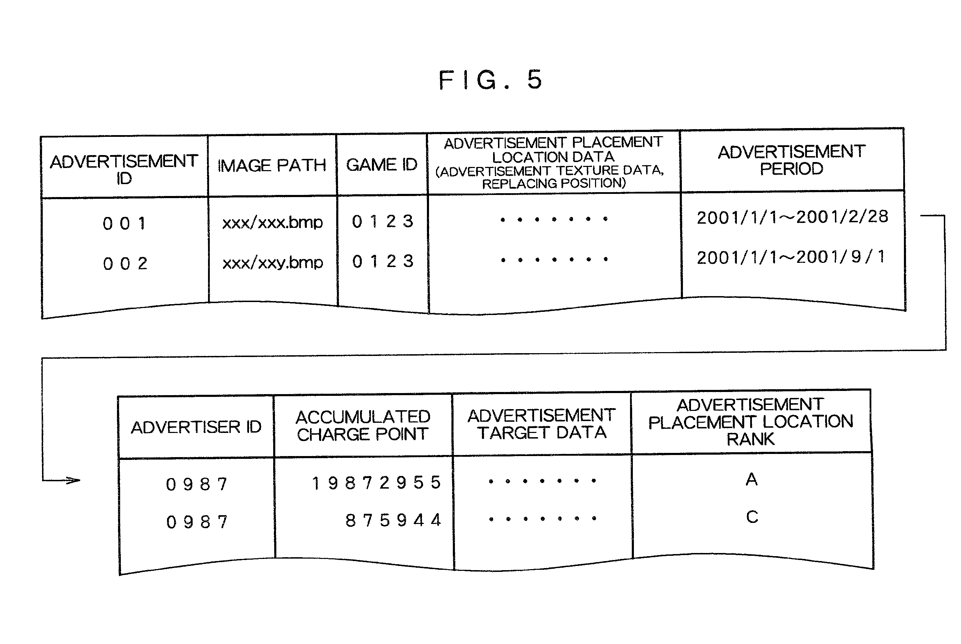

Fig. 5 is a diagram explaining the content of the advertisement management database 48. As shown, the advertisement management database 48 is configured to store "advertisement ID", "image path" , "game ID", "advertisement placement location data", "advertisement period", "advertiser ID", "accumulated charge point", "advertisement target data", and "advertisement placement location rank", all being mutually associated. "Advertisement ID" is information identifying an advertisement supplied from various advertisers. "Image path" indicates a location where an advertisement image is stored and an image file name. "Game ID" is information identifying a game in which the relevant advertisement is to be inserted. "Advertisement placement location data" indicates a specific texture image and a location therein in the game identified by the relevant game ID, where the relevant advertisement image is to be embedded. As shown, "advertisement placement location data" includes "texture image ID" and "replacing position. "Texture image ID" is information identifying a texture image used in the relevant game, and "replacing position" is information, expressed in X and Y coordinates, specifying a position in each texture image, where an advertisement image is to be embedded. "Advertisement period" indicates a period during which the relevant advertisement is being displayed. "Advertiser ID" identifies an advertiser of the relevant advertisement, and is referred to in specification of a party to be charged for the relevant advertisement. "Accumulated charge point" is for use as base information in calculation of a charge amount. A higher point may result in a higher advertisement charge. "Advertisement target data" is information specifying a target player group, or a range of players' attributes, targeted by the relevant advertisement. The group may be specified by age, sex, profession, and so on, such as "male in 40s", "female college students", or the like. "Advertisement placement location rank" indicates the level of advertisement effects that could be achieved by placing an advertisement in the advertisement placement location specified by the relevant game ID and advertisement placement location data. An advertisement charge amount may depend on the rank, e.g., A to D ranks, assigned to the relevant advertisement.

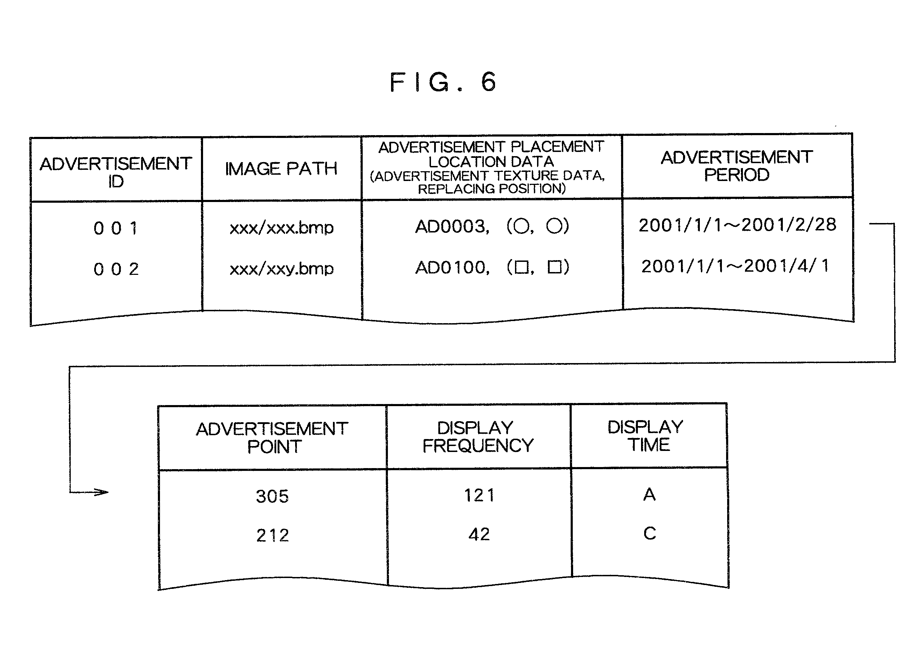

Fig. 6 shows the content of an advertisement database held at a game terminal. For a game machine 36 having a structure shown in Fig. 2, this advertisement database may be held, for example, in an auxiliary storage device 34. As shown, the advertisement database is configured to store, for each advertisement image, or record, "advertisement ID", "image path", "advertisement placement location data", "advertisement period", "advertisement point", "display frequency", and "display time", all being mutually associated. Each record is created when a new advertisement image is downloaded from the advertisement management server 50, and any record with a past advertisement period is deleted. In the advertisement database, "advertisement ID" is information identifying an advertisement image downloaded, and the content of "advertisement ID" in the advertisement management database 48 for the downloaded advertisement image is stored intact in the column of this information "advertisement ID". "Image path" indicates a location where the downloaded advertisement image is stored and an image file name. Specifically, suppose that the game machine 36 has the structure of Fig. 2, the downloaded advertisement image is stored in the auxiliary memory device 34, and information designating a path in the auxiliary memory device 34, where the image is stored, is stored in the column of this information "image path". "Advertisement placement location data" indicates a specific texture image and a specific portion therein where an advertisement image is to be embedded, and the content of "advertisement placement location data" in the advertisement management database 48 for the downloaded advertisement image is stored intact in the column of this information "advertisement placement location data". "Advertisement period" indicates a period during which the relevant advertisement is being displayed, and the content of "advertisement period" in the advertisement management database 48 for the downloaded advertisement image is stored intact in the column of this information "advertisement period". "Advertisement point" is numerical information to be incremented every time an advertisement image is displayed on a game screen, and is transferred to the advertisement management server 50 for use as base information in calculation of an accumulated charge point and a charge amount. "Display frequency" indicates the number of times the relevant advertisement image has been displayed on a game screen. "Display time" indicates a total time during which the relevant advertisement image has been displayed on a game screen. In the present game advertisement charge system 35, for enhancement of advertisement effects, "display frequency" and "display time" information is monitored at each game terminal and, when the relevant advertisement image has been displayed more than a predetermined number of times or for more than a predetermined time, displaying of that advertisement on the game screen is discontinued. After the discontinuation, a default advertisement image, such as an advertisement image of a software production company itself that produced the software, or any other advertisement image, may be displayed instead of the discontinued advertisement image.

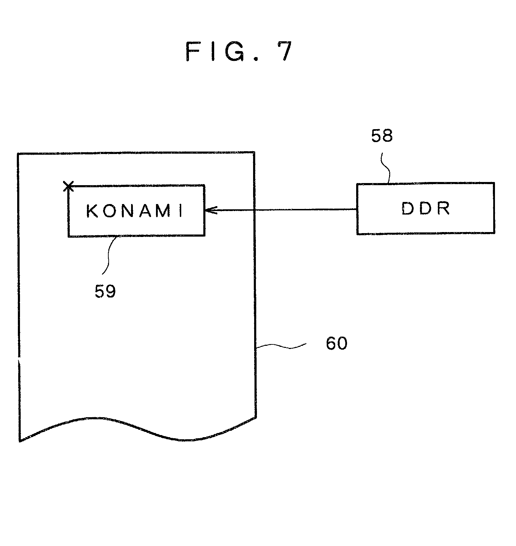

Fig. 7 is a diagram explaining a method for displaying an advertisement image on a game screen. As described above, at a game terminal, a 3D game is performed. In the game, an object, expressed using assembled polygons, is installed in a virtual 3D game space. The polygon has a texture attached on its surface, that exhibits the external appearance of the object. Specifically, the polygons constituting the placard objects 52, 54, 56 have advertisement images attached thereto as a texture. A texture image 60 containing a plurality of images each for use as a texture as shown in Fig. 7, is supplied from the DVD 60 to the game terminal, and an image portion designated by a pair of texture vertical coordinates (VX, VY) is selected from the texture image 60, and attached as a texture to a polygon. Note that only a default advertisement image 59 is shown in Fig. 7. The texture images 60 may include a default advertisement image 59, which may be an advertisement image for a game software company itself that produced the software, and may be attached as a texture to a predetermined object, such as a placard object, unless other advertisement image is downloaded from the advertisement management server 50. When a new advertisement image 58 is downloaded from the advertisement management server 50, at the game terminal, a new record is added to the advertisement database (Fig. 6), and the advertisement image 58 is stored in the memory device, such as an auxiliary memory device 34. When the time arrives to create a game image using a texture image 60 identified by the "advertisement texture image ID", contained in the "advertisement placement location data", an advertisement image 58 is read from the location designated by the " image path" and embedded into the point designated by the "replacing position", also contained in the "advertisement placement location data", that is specifically the point marked X in the image in Fig. 7. Then, the resultant data is sent to the image processing section 16. This arrangement makes it possible to show the advertisement image 58, downloaded from the advertisement management server 50, included in a game advertisement while using the image as a texture. When no advertisement image is available for downloading from the advertisement management server 50, a default advertisement image 59 may be used as a texture in creation of a game image.

Next, a process of displaying an advertisement on a game screen using the above described advertisement management database 48 and the advertisement database will be detailed with reference to a flowchart.

First, a process executed at a game terminal will be described.

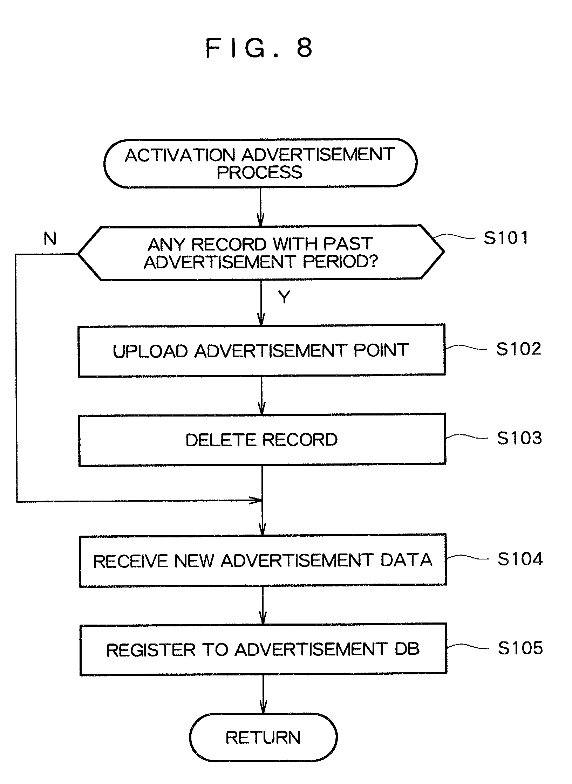

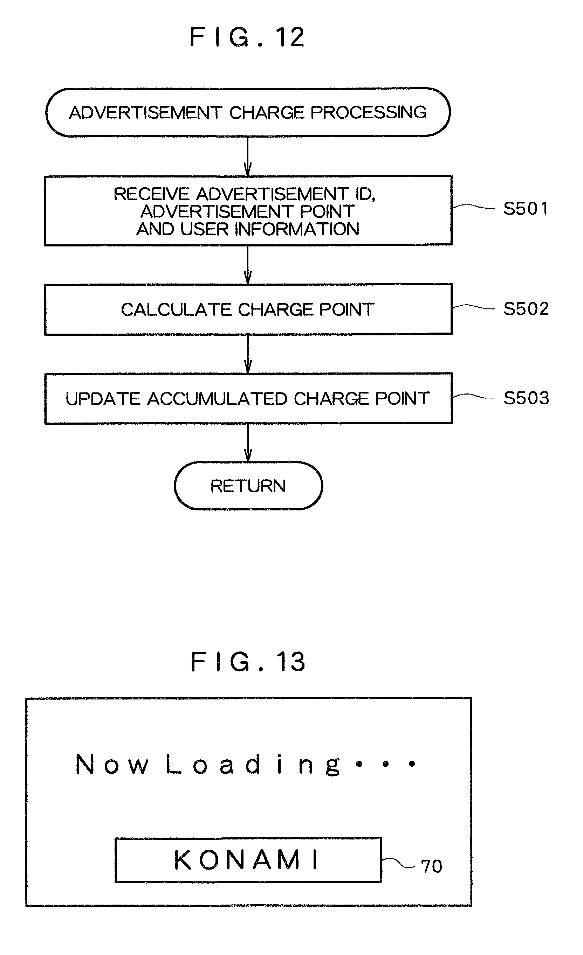

Fig. 8 is a flowchart explaining an advertising process executed at the time of activating a game terminal (an activation advertisement process) . As shown, upon activation, a game terminal first reads its advertisement database to check whether or not there is any record with its "advertisement period" no longer including the present date (S101). When no such record is found, the process proceeds to S104. When any such record is found, on the other hand, the "advertisement point" included in that record is uploaded to the advertisement management server 50 (S102) along with the "advertisement ID", also included in the record, and user information, such as the ID of the player who uses the game terminal. The information will be used in an advertisement charge process applied in the advertisement management server 50 (Fig. 12). Thereafter, at the game terminal, any record relating to any advertisement image with a past advertisement period is deleted (S103). Then, the game terminal downloads new advertisement data, containing an advertisement image, an advertisement ID, advertisement placement location data, and an advertisement period, from the advertisement management server 50 (S104). Specifically, the game terminal first sends to the advertisement management server 50 a game ID identifying a game to be performed at that game terminal, and in turn receives corresponding new, that is, undownloaded, advertisement data. Thereafter, the game terminal stores the advertisement image contained in the advertisement data in a storage device, such as the auxiliary memory device 34, adds a new record to the advertisement database, and records data for "advertisement ID", "image path", "advertisement placement location data", and"advertisement period" for the new record added (S105). By following the above described activation advertisement processing, the game terminal can always retain the latest advertisement data.

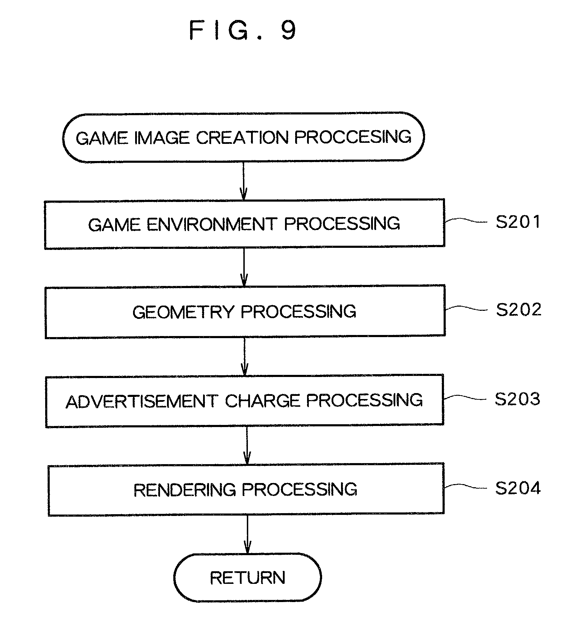

Next, Fig. 9 is a flowchart explaining a game image creation process executed at a game terminal. This process is performed every predetermined time, e. g., 1/60 second, while game processing is being performed. In the following, the game terminal is assumed to be a game machine 36 having the structure shown in Fig. 2. As shown, the microprocessor 14 of the game machine 36 initially executes a game environment process based on the game program and game data read from the DVD-ROM 25 (S201). In the game environment process, positions and orientations of all stationary and dynamic objects in the virtual 3D space are calculated. A stationary object is an object that does not change its position as the game proceeds, and may include a road object, a mountain object, a grassland object, placard objects 52, 54, 56, and so on. A dynamic object, on the other hand, is an object that changes its position and/or orientation as the game proceeds, and may include a vehicle object, not shown. The position and orientation of a dynamic object may vary according to a game program or an operation signal input via the controller 32. In the game environment process, the viewpoint 72, the viewing direction, the position of the view range 76, and light source information are also calculated.

The microprocessor 14 then performs a geometry process (S202). In the geometry process, coordinates in a world coordinate system are converted to those in a viewpoint coordinate system, in which, using the viewpoint 72 as an origin, the direction advancing from the viewpoint, or a viewing direction, is determined as a Z direction; a horizontal direction is determined as an X direction; and a vertical direction is determined as an Y direction. Further, color information concerning the vertex of each polygon that constitutes an object is modified based on the light source information concerning the color and position of the light source. Clipping is also applied.

Subsequently, the game machine 36 performs an advertisement charge process (S203). In the advertisement charge process, whether or not an object to which an advertisement image is attached as a texture is present in the view range 76 is determined. Further, an object constituted of a polygon or polygons including one to which an advertisement image is attached and that is not clipped is determined. Then, for each unclipped polygon for attachment of an advertisement image, an advertisement point P is calculated based on the following expression (1).

$$P = f(\theta) \times g(S) \times h(r) \qquad (1)$$

$\theta$ is a displaced angle between the viewing direction and the advertisement placement direction or a value corresponding to the displaced angle. The viewing direction is a direction from the viewpoint 72 to the center of the view range 76. The advertisement placement direction is a direction from the rear side of a polygon on which the advertisement image is attached toward the front surface thereof. $\theta$ can be calculated from a scalar product between the normal vector of a polygon to which an advertisement image is attached as a texture, and the viewing direction vector. S represents a displayed area, or a value corresponding thereto, of a polygon to which an advertisement image is attached as a texture. For brevity of the data processing, assuming that the area of a polygon itself in the vertical 3D space is set as $\sigma$, a value resulting from dividing $\sigma$ by the distance from the viewpoint 72 to the polygon, i.e., Z value, can be used as a displayed area S. r is a distance between the display position of an advertisement image and the center of the game screen. For example, the distance between the straight line in the viewing direction, that penetrates the view point 72 and the polygon having an advertisement image attached thereon, may be used as a distancer. f is a function, specifically a decreasing function, of a displaced angle $\theta$, becoming larger for a smaller displaced angle $\theta$ and smaller for a larger displaced angle $\theta$. g is a function, specifically an increasing function, of a displayed area S, becoming larger for a larger displayed area S and smaller for a smaller displayed area S. h is a function, specifically a decreasing function, of the distance r, becoming smaller for a larger distance r and larger for a smaller distance r. The functions f, g, and h may be continuous or discontinuous functions.

As described above, among all polygons to which an advertisement is attached as a texture, for each polygon to which an advertisement image is attached and placed within a view field without clipping, an advertisement point P is calculated using the expression (1). Then, the resultant value of the calculated point P is added to the value in the "advertisement point" column in the advertisement database (Fig. 6). Specifically, "advertisement point" contained in a record for each advertisement image is read; the advertisement P calculated using the expression (1) is added to the point read from the "advertisement point" ; and the resultant point is stored again in the "advertisement point" column of that record. Further, the values of "display frequency" and "display time" in the record for each advertisement image are incremented by one, respectively.

Thereafter, the microprocessor 14 sends to the image processing section 16 vertical coordinates, vertical color information, texture coordinates, and an alpha value of each polygon belonging to the view range 76, and the image processing section 16 creates, based on the information, a display image in the buffer in the VRAM (S204). Specifically, the display image is created by projecting an object toward a screen. The resultant game image thus created in the buffer is read at predetermined timing, and displayed on the monitor 18.

Through the game image creation process described above, a game image is created. In the case where any advertisement image is contained in the created game image, an advertisement point should be calculated and added to the "advertisement point" saved in the advertisement database. In addition, the "display frequency" and "display time" in the advertisement database are also updated. Where the advertisement point is calculated based on the angle $\theta$, formed between the advertisement placement direction and the viewing direction, and the displayed area S of an advertisement image, calculation of a charge amount based on the advertisement point enables determination of a reasonable charge amount commensurate with the advertisement effect of the relevant advertisement.

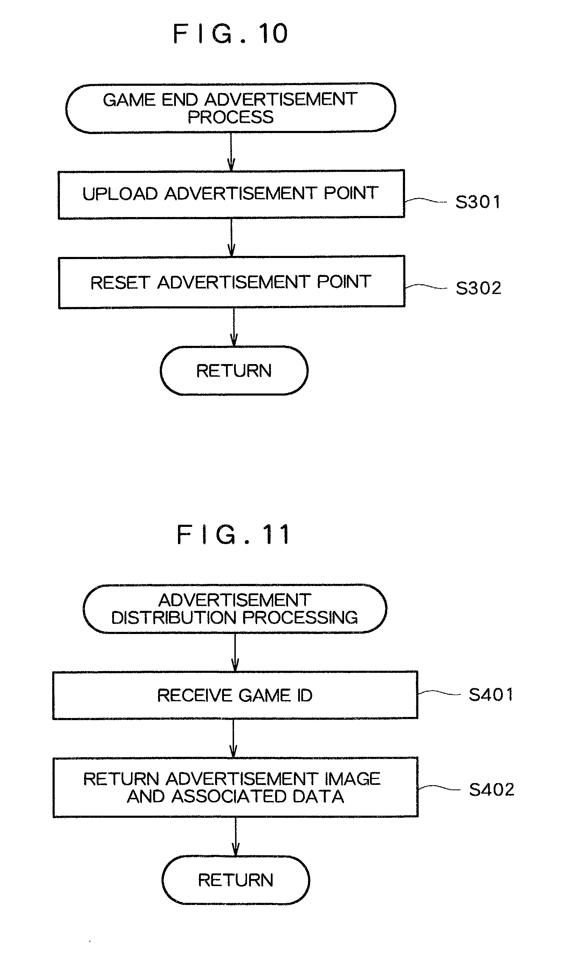

Fig. 10 is a flowchart explaining an advertisement process executed at the time of ending the game at a game terminal (game end advertisement process). At the time of ending the game, the game terminal reads the "advertisement point" for each record from the advertisement database, and uploads the point in association with an advertisement ID concerned to the advertisement management server 50 (S301). In the uploading, information concerning the user who is enjoying the game at the game terminal, or user information, is additionally uploaded. When the uploading completes normally, the "advertisement point" for each record included in the advertisement database is reset to zero (S302). As described above, an accumulated advertisement point from the start to end of the game performance is uploaded to the advertisement management server 50, together with user information. The uploaded advertisement point and user information are utilized in calculation of a charge amount in the advertisement management server 50.

In the following, a process in the advertisement management server 50 will be described.

Fig. 11 is a flowchart explaining an advertisement distribution process in the advertisement management server 50. As shown, in order to distribute advertisement data, the advertisement management server 50 initially receives an advertisement distribution request containing a game ID from a game terminal (S401), and then reads all records corresponding to the received game ID from the advertisement management database 48. Subsequently, the server 50 reads "advertisement ID", "image path", "advertisement placement location data", and "advertisement period" from these records, and additionally advertisement images from the places designated by the respective "image paths". Thereafter, the server 50 sends all of the "advertisement ID", "advertisement placement location data", "advertisement period", and the advertisement images as advertisement data to the game terminal (S402). As described above, advertisement data can be distributed from the advertisement management server 50 to a game terminal.

Fig. 12 is a flowchart explaining an advertisement charge process in the advertisement management server 50. As shown, in the advertisement charge process, the advertisement management server 50 receives from a game terminal an advertisement ID, an advertisement point, and user information (S501), all of these being uploaded to the advertisement management server 50 from a game terminal at the time of ending the game. User information is information describing the attributes of the user who is enjoying a game at the game terminal, including age, sex, profession, and so forth.

Next, the advertisement management server 50 calculates a charge point based on the information received (S502). Specifically, the advertisement management server 50 first reads a record for each of the received advertisement ID's, from the advertisement management database 48 to obtain "advertisement target data", "advertisement placement location rank", and "accumulated charge point". The advertisement management server 50 then determines whether or not the received user information falls in the user range specified by the "advertisement target data". When it does, the advertisement management server 50 sets a predetermined value, e.g., 2, as a coefficient U. When it does not, on the other hand, the advertisement management server 50 sets another predetermined value smaller than the predetermined value mentioned above, e.g., 1. Alternatively, an extent of difference between the user range specified by the "advertisement target data" and that by the received user information may be set as a coefficient U. Further, a variable R is set according to the "advertisement placement location rank". For the rank A, for example, 2.5 may be set; for the rank B, 2 may be set; for the rank C, 1.5 may be set; and for the rank D, 1 may be set. Then, coefficient U, coefficient R, and the received advertisement point P are all inserted into the following expression (2) to calculate the charge point M.

$$M = P \times U \times R \qquad (2)$$

Thereafter, the advertisement management server 50 adds the charge point M, calculated at S502, to the "accumulated charge point", obtained at the same step, or S502 and stores the resultant charge point M in the original column "accumulated charge point" column (S503). As described above, the value of "accumulated charge point" for each advertisement image can be updated. The advertisement management server 50 may multiply the value of "accumulated charge point" by a predetermined unit price at, for example, every month end to thereby calculate an amount to be charged for displaying a corresponding advertisement. The advertisement management server 50 may additionally output the calculated charge amount by printing, displaying, or sending to other terminal via the communication network 46.

As described above, in the preferred embodiment of the present embodiment, it is possible to distribute advertisement data from the advertisement management server 50 to a game terminal, and to output the advertisement data at the game terminal while a game is being performed. In addition, it is also possible to determine a reasonable charge amount that reflects the result of quantity and quality evaluation on an advertisement output, to be charged to an advertiser of that advertisement.

Here, the player may be expected to pay more attention to an advertisement being displayed on a game screen or output via audio while game program and game data are being loaded. Fig. 13 shows an exemplary game image to be displayed while game program and data are being loaded. As shown, while a game program and game data are being loaded, an advertisement image 70 may be displayed, as well as a message telling that it is loading. This may be effective to impress the advertisement image 70 more strongly on the player. When a different advertisement image is displayed every time a game program and game data are loaded, a wider variety of advertisements can be presented to the player, compared to displaying the same advertisement image all the time. Moreover, more advertisement opportunities can be offered to more advertisers.

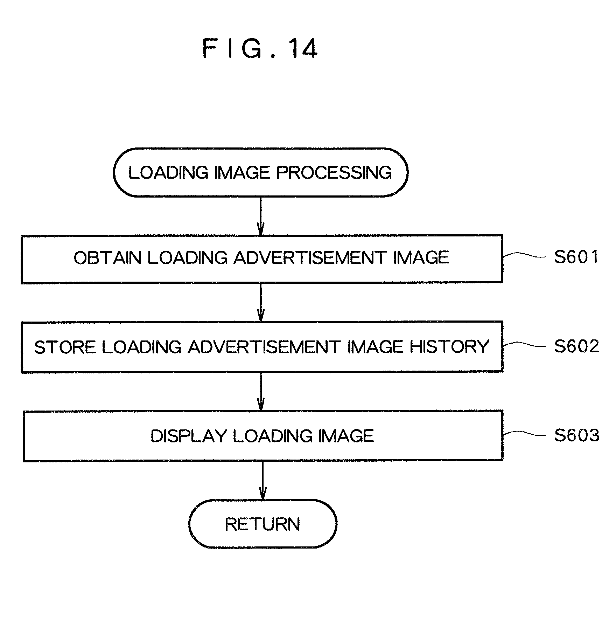

Fig. 14 is a flowchart explaining a process applied at each game terminal for displaying such a game image, or a loading image. As shown, before displaying a loading image, an advertisement image to be shown in the loading image, or a loading advertisement image, is obtained (S601). Here, the game terminal is configured to store a history of advertisements having thus far been displayed while loading. This may be a list of sequential advertisement ID's of the advertisement images having been shown in loading images. A preferable loading advertisement image may be obtained with reference to the history. For example, a loading advertisement image that has not been displayed during a predetermined number of past loads may be obtained. Alternatively, once some loading advertisement images has been displayed more than a predetermined number of times, a different loading advertisement image may be obtained instead. Thereafter, information that identifies the obtained loading advertisement image is added to the advertisement history (S602), and a loading image is displayed using the loading screen image obtained (S603). As described above, a loading image is displayed while a game program and game data for the main game processing are being obtained. This arrangement can effectively impress the advertisement image 70 on the player .

It should be noted that the present invention is not limited to the above described embodiment.

For example, whereas a commercial advertisement is displayed during performance of a 3D game in the above, the present invention can be similarly applied to displaying of a commercial advertisement during performance of a 2D game.

Further, whereas the present invention is applied to displaying of an advertisement containing a game image in the above to thereby calculate a charge amount, the present invention can be similarly applied to audio outputting of an advertisement during performance of a game to thereby calculate a charge amount. That is, audio output of an advertisement is evaluated for its quality and quality, and the charge amount is determined so as to reflect the evaluation result. For quantity evaluation, frequency, volume, and so on, of the audio output of an advertisement may be employed as criteria. For quality evaluation, presence or absence or volume of other audio, such as game music, effect sounds, and so forth, or a game situation in which the advertisement is output via audio, may be employed as criteria.

Still further, whereas an advertisement image is managed in units of texture in the above, in the case where a plurality of polygons or textures (advertisement images) together express a single advertisement, an advertisement point of such an advertisement with at least one of its associated polygons being clipped, may not be incremented. Alternatively, an advertisement point may be incremented according to a ratio in area between the displayed portion of an advertisement and the entire advertisement. Still alternatively, display quality of an advertisement may be evaluated based on the number of polygons used to display the advertisement image, and an advertisement charge amount may be calculated accordingly.

## Claims

1. A game advertisement charge system, comprising:

   means for displaying an advertisement on a game screen;
   means for obtaining displayed amount information concerning a displayed amount of the advertisement displayed; and
   means for calculating a charge amount to be charged for displaying the advertisement based on the displayed amount information obtained.

2. A game advertisement charge system as claimed in claim 1, wherein the displayed amount information contains displayed area information concerning an area in which the advertisement is displayed on the game screen.

3. A game advertisement charge system as claimed in claim 1 or claim 2, wherein the displayed amount information contains display time information concerning a time during which the advertisement is displayed on the game screen.

4. A game advertisement charge system according to any one of the preceding claims, wherein the displayed amount information contains frequency information concerning a number of times the advertisement has been displayed on the game screen.

5. A game advertisement charge system, comprising:

   means for displaying an advertisement on a game screen;
   means for obtaining display quality information concerning the advertisement displayed; and
   means for calculating a charge amount to be charged for displaying the advertisement, based on the display quality information obtained.

6. A game advertisement charge system as claimed in claim 5,
   wherein
       a view of a virtual 3D space viewed from a predetermined viewpoint is shown on the game screen, and
       the display quality information contains information describing a relationship between a display direction in which the advertisement is displayed in the 3D space and a viewing direction.

**7.** A game advertisement charge system as claimed in claim 5 or claim 6, wherein

the display quality information contains display position information concerning a position on the game screen in which the advertisement is displayed.

**8.** A game advertisement charge system as claimed in claim 5, wherein

a view of a vertical 3D space viewed from a predetermined view is shown on the game screen, and

the display quality information contains clipping information describing whether or not an advertisement is clipped and a part thereof is thus displayed on the game screen.

**9.** A game advertisement display system, comprising:

advertisement display means for displaying an advertisement on a game screen;
means for obtaining displayed amount information concerning a displayed amount of the advertisement; and
means for limiting display of the advertisement on the game screen when the displayed amount of the advertisement reaches a predetermined amount.

**10.** A game system as claimed in claim 9, wherein the displayed amount information is information corresponding to display frequency of the advertisement.

**11.** A game system as claimed in claim 9, wherein the displayed amount information is information corresponding to a display time of the advertisement.

**12.** A game machine for obtaining a game program or game data and for executing game processing based on the game program or game data obtained, comprising:

means for obtaining an advertisement displaying program or data;

wherein
the advertisement displaying program or data is obtained before the game program or game data is obtained, and
the game program or game data is then obtained while an advertisement is being displayed based on the advertisement displaying program or data obtained.

**13.** A game machine as claimed in claim 12, further comprising:

means for storing identification information identifying at least one of advertisements having been displayed; and
means for selecting the advertisement displaying program or data to be obtained based on the identification information.

**14.** A game advertisement charge system, comprising:

means for displaying an advertisement on a game screen for a game;
means for obtaining attribute information on a player enjoying the game;
means for storing attribute information on a player targeted by the advertisement; and
means for calculating a charge amount to be charged for displaying the advertisement, based on the attribute information of the player targeted by the advertisement and the attribute information of the player enjoying the game.

**15.** A game advertisement charge method, comprising the steps of:

obtaining output amount information concerning an amount of advertisement output while a game is being performed; and
calculating a charge amount to be charged for outputting the advertisement based on the output amount information obtained.

**16.** A game advertisement charge method, comprising the steps of:

obtaining output quality information concerning an advertisement output while a game is being performed; and
calculating a charge amount to be charged for outputting the advertisement based on the output quality information obtained.

**17.** A game advertisement output method, comprising the steps of:

obtaining output amount information concerning an amount of advertisement output while a game is being performed; and
limiting outputting of the advertisement while the game is being performed when the amount of advertisement output has reached a predetermined value.

**18.** A method for controlling a game machine having means for obtaining a game program or game data and means for executing game processing based on the game program or game data obtained, the method comprising the steps of:

obtaining an advertisement output program or data;

outputting an advertisement based on the advertisement output program or data obtained; and

obtaining the game program or game data while the advertisement is being output.

19. A game advertisement charge method, comprising the steps of:

obtaining attribute information on a player enjoying a game in which an advertisement is output; and

calculating a charge amount to be charged for outputting the advertisement based on the attribute information on the player enjoying the game and attribute information obtained in advance on a player targeted by the advertisement.

20. A program for causing a computer to execute the steps of:

outputting an advertisement on a game screen; obtaining output amount information concerning an amount of the advertisement output; and processing the output amount information as base information in calculation of a charge amount to be charged for outputting the advertisement.

21. A program for causing a calculator to execute the steps of:

outputting an advertisement on a game screen; obtaining output quality information concerning the advertisement to be output; and processing the output quality information as base information in calculation of a charge amount to be charged for outputting the advertisement.

22. A program for causing a computer to execute the steps of:

outputting an advertisement on a game screen for a game; obtaining attribute information on a player enjoying the game; and processing the attribute information as base information in calculation of a charge amount to be charged for outputting the advertisement.

23. An information storage medium storing a program according to any one of claims 20 to 22.

# FIG. 1

EP 1 236 487 A2

# F I G . 2

MICROPROCESSOR
14

IMAGE PROCESSING SECTION
16

MONITOR
18

12

36

MAIN MEMORY
26

INPUT/OUTPUT PROCESSING SECTION
30

AUXILIARY MEMORY DEVICE
34

CONTROLLER
32

AUDIO PROCESSING SECTION
20

DVD REPRODUCTION SECTION
24

22

25

11

EP 1 236 487 A2

# FIG. 3

# FIG. 4

# FIG. 5

| ADVERTISEMENT ID | IMAGE PATH | GAME ID | ADVERTISEMENT PLACEMENT LOCATION DATA (ADVERTISEMENT TEXTURE DATA, REPLACING POSITION) | ADVERTISEMENT PERIOD |
|---|---|---|---|---|
| 0 0 1 | xxx/xxx.bmp | 0 1 2 3 | ・・・・・・・・ | 2001/1/1～2001/2/28 |
| 0 0 2 | xxx/xxy.bmp | 0 1 2 3 | ・・・・・・・・ | 2001/1/1～2001/9/1 |

| ADVERTISER ID | ACCUMULATED CHARGE POINT | ADVERTISEMENT TARGET DATA | ADVERTISEMENT PLACEMENT LOCATION RANK |
|---|---|---|---|
| 0 9 8 7 | 1 9 8 7 2 9 5 5 | ・・・・・・・・ | A |
| 0 9 8 7 | 8 7 5 9 4 4 | ・・・・・・・・ | C |

EP 1 236 487 A2

## F I G. 6

| ADVERTISEMENT ID | IMAGE PATH | ADVERTISEMENT PLACEMENT LOCATION DATA (ADVERTISEMENT TEXTURE DATA, REPLACING POSITION) | ADVERTISEMENT PERIOD |
|---|---|---|---|
| 0 0 1 | xxx/xxx.bmp | AD0003, (○, ○) | 2001/1/1~2001/2/28 |
| 0 0 2 | xxx/xxy.bmp | AD0100, (□, □) | 2001/1/1~2001/4/1 |

| ADVERTISEMENT POINT | DISPLAY FREQUENCY | DISPLAY TIME |
|---|---|---|
| 305 | 121 | A |
| 212 | 42 | C |

EP 1 236 487 A2

# FIG. 7

# F I G . 8

```
        ┌──────────────────────────────┐
        │   ACTIVATION ADVERTISEMENT   │
        │           PROCESS            │
        └──────────────────────────────┘
                        │
                        ▼
    N      ╱────────────────────────────╲
    ┌──────   ANY RECORD WITH PAST          ─── S101
    │       ╲  ADVERTISEMENT PERIOD?     ╱
    │        ╲────────────────────────╱
    │                   │ Y
    │                   ▼
    │       ┌──────────────────────────────┐
    │       │  UPLOAD ADVERTISEMENT POINT   │ ─── S102
    │       └──────────────────────────────┘
    │                   │
    │                   ▼
    │       ┌──────────────────────────────┐
    │       │        DELETE RECORD          │ ─── S103
    │       └──────────────────────────────┘
    │                   │
    └───────────────────┤
                        ▼
        ┌──────────────────────────────────┐
        │  RECEIVE NEW ADVERTISEMENT DATA   │ ─── S104
        └──────────────────────────────────┘
                        │
                        ▼
        ┌──────────────────────────────────┐
        │   REGISTER TO ADVERTISEMENT DB    │ ─── S105
        └──────────────────────────────────┘
                        │
                        ▼
                 ┌──────────────┐
                 │    RETURN     │
                 └──────────────┘
```

21

# F I G . 9

```
GAME IMAGE CREATION PROCCESING
```

⬇

```
GAME ENVIRONMENT PROCESSING        ~ S201
```

⬇

```
GEOMETRY PROCESSING                ~ S202
```

⬇

```
ADVERTISEMENT CHARGE PROCESSING    ~ S203
```

⬇

```
RENDERING PROCESSING               ~ S204
```

⬇

```
RETURN
```

# F I G . 10

GAME END ADVERTISEMENT PROCESS

UPLOAD ADVERTISEMENT POINT — S301

RESET ADVERTISEMENT POINT — S302

RETURN

# F I G . 11

ADVERTISEMENT DISTRIBUTION PROCESSING

RECEIVE GAME ID — S401

RETURN ADVERTISEMENT IMAGE AND ASSOCIATED DATA — S402

RETURN

# F I G . 12

```
ADVERTISEMENT CHARGE PROCESSING
```

```
RECEIVE ADVERTISEMENT ID,
ADVERTISEMENT POINT
AND USER INFORMATION
```
— S501

```
CALCULATE CHARGE POINT
```
— S502

```
UPDATE ACCUMULATED CHARGE POINT
```
— S503

```
RETURN
```

# F I G . 13

N o w   L o a d i n g · · ·

K O N A M I — 70

# F I G . 14

```
┌─────────────────────────────────┐
│    LOADING IMAGE PROCESSING      │
└─────────────────────────────────┘
                 │
                 ▼
┌─────────────────────────────────────┐
│  OBTAIN LOADING ADVERTISEMENT IMAGE  │ ── S601
└─────────────────────────────────────┘
                 │
                 ▼
┌──────────────────────────────────────────────┐
│ STORE LOADING ADVERTISEMENT IMAGE HISTORY    │ ── S602
└──────────────────────────────────────────────┘
                 │
                 ▼
┌─────────────────────────────────┐
│      DISPLAY LOADING IMAGE       │ ── S603
└─────────────────────────────────┘
                 │
                 ▼
┌─────────────────┐
│     RETURN      │
└─────────────────┘
```